# EUROPEAN PATENT APPLICATION

(11) **EP 2 128 058 A1**
(43) Date of publication of application: **02.12.2009**
(21) Application number: 08425386.3
(22) Date of filing: 29.05.2008
(51) Int. Cl.: B65H 16/02, B65H 35/00, B29C 70/54

(54) **Rotating support device for a plurality of reels of sheet manufactured articles suitable for permitting feeding and automatic cutting of a piece of said manufactured articles in the required length**

(71) Applicant: Brunini, Giovanni, 21052 Busto Arsizio (IT)
(72) Inventor: Brunini, Giovanni, 21052 Busto Arsizio (IT)
(74) Representative: Postiglione, Ferruccio

(57) **Abstract**

Rotating support device for a plurality of reels of sheet manufactured articles suitable for permitting feeding and automatic cutting of a piece of said manufactured articles in the required length comprising a supporting structure (1) to which a rotating drum (2) is connected, on which various spindles (3) are mounted suitable for supporting an equal number of manufactured article feed reels (4). Said rotating drum (2) can be rotated to an angle in order to set the required reel of material to the position for use. Means (24, 25, 26) are provided for gripping the front edge of the manufactured article unwound from one of the reels, means (K,Y,N) for moving forward the manufactured article taken from said reel (4) by the required length measured by measuring means (50), means (43) for cutting the manufactured article unwound, means (X,K,Y) for recovery of the part of the manufactured article unwound but not used which is rewound on the same reel, means forming a transparent cover (47) with hinged sections enclosing the reel holder drum (2) in addition to means (48) for conditioning the manufactured articles supported inside said transparent cover (47).

## Description

### FIELD OF THE INVENTION

The present invention concerns a rotating support device for a plurality of reels of sheet manufactured articles of the same or different type suitable for permitting feeding and automatic cutting of a piece of said manufactured articles in the required length.

This rotating support device can be specifically and advantageously employed for the preparation of particularly lightweight and shock-resistant bodywork parts for motor vehicles and aircraft, hulls of vessels and similar which are obtained by superimposing layers of fibre on a modelling mould to form composite materials.

### TECHNICAL BACKGROUND TO THE INVENTION

As known, composite materials are obtained with superimposed layers of fibres which are joined together by means of heat or pressure in order to form one single composite material.

In particular, for the production of manufactured articles made of composite material, various products are used such as carbon fibre, glass, Kevlar and fabrics pre-impregnated with resin.

Normally in a work phase of the composite product, called lamination, the expendable materials used consist of sheet manufactured articles wound on reels of considerable weight and dimensions.

In the processes belonging to the known art, said reels are arranged on vertical reel holder devices, provided with supports that house the reels and which permit rotation thereof around its axis.

In the reel holder devices of the known art, the above supports are integral with the device itself, permitting only rotary movement of the reel and consequently allowing the various reels to be arranged only in fixed positions.

As a result, loading and unloading of the reels of material must be performed manually, both in the set-up operations, during which the reels are transported from the magazine to the reel holder, and when the position of a reel has to be changed during a work process.

The limits of said systems are numerous and evident.

Firstly, the fact that the reel holder has to be manually set up whenever a particular reel is required during a work process places heavy demands on the personnel assigned to said operations, in both physical terms and in terms of saturation of the human resources available for the process.

Furthermore, said manual set-up involves an increase in the work times and consequently in the costs sustained.

In addition to this, in the operations for preparation of the reel holder for a given work process, the operator assigned to said operations must exert a considerable force to raise the reels, at times to considerable heights.

Lastly, during the working operations, the various reels are positioned at very different heights from one another, making it awkward to position the material with respect to the working surface, and making it necessary to periodically rewind the excess material on the reel.

The above-mentioned problems have been partly solved in a previous Italian utility model application No. MI2006U000458, filed on 22nd December 2006 by the same Applicant, for a rotating reel holder supporting a plurality of reels of material rotated by a gearmotor unit which rotates the reel holder drum to set the required reel to the position for feeding the manufactured article forward and cutting it to the required length. With this reel holder, the required reel can be rapidly selected and easily positioned in the cutting position, with manual insertion of the front edge of the manufactured article by a pre-set amount.

### SUMMARY OF THE INVENTION

The present invention aims to improve the known reel holder. According to particular embodiments, it provides means for automatic insertion of the manufactured article between clamping rollers, forward feeding of the same by an amount established on a time by time basis, cutting of the manufactured article to obtain a piece of the required length, retraction and rewinding of the part of the manufactured article not used on the reel to permit, if necessary, the selection of another reel, closing of the entire mechanism which moves inside a transparent cover with hinged sections for temporary access inside it, and the possibility of refrigeration of the inside of the transparent cover when using manufactured articles that can deteriorate at ambient temperature.

An object of the present invention is to produce a reel holder which improves operator safety.

A further object of the present invention is to produce a reel holder at low cost which permits easy inexpensive maintenance.

Said objects are achieved by a reel holder for material feed reels in the production of composite materials, as claimed in the independent claims, to which reference is made for the sake of brevity. Preferred embodiments are described in the dependent claims.

### BRIEF DESCRIPTION OF THE DRAWINGS

The invention is described in detail below, by way of non-limiting example, with reference to the accompanying drawings, in which:
- figure 1 shows a simplified front view of the reel holder according to the present invention;
- figure 2 shows a lateral view of the reel holder drum, according to the present invention;
- figure 3 shows a lateral view of the unit for inversion of the forward movement of the manufactured article towards the cutting position;
- Figure 4 shows a lateral view of the unit for inversion of the retraction movement of the manufactured article from the cutting position for recovery of the same on the reel;

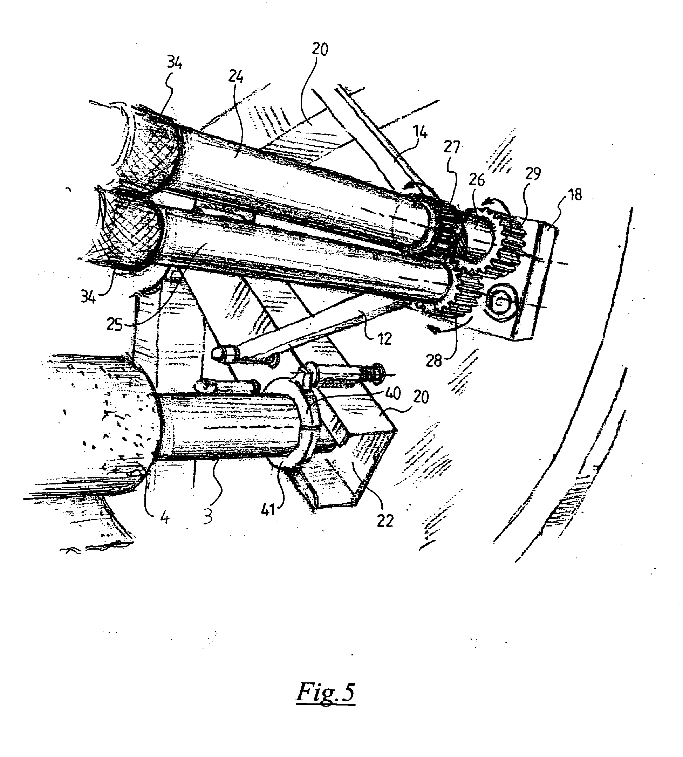

- Figure 5 shows a perspective view of the unit for transmission of the movement to the spindles for gripping or engaging the front edge of the manufactured article unwound from the material feed reel; and
Figure 6 shows in a perspective view the semi-collar system for retaining one of the hubs of a spindle supporting a reel of fabric.

### DETAILED DISCLOSURE OF THE INVENTION

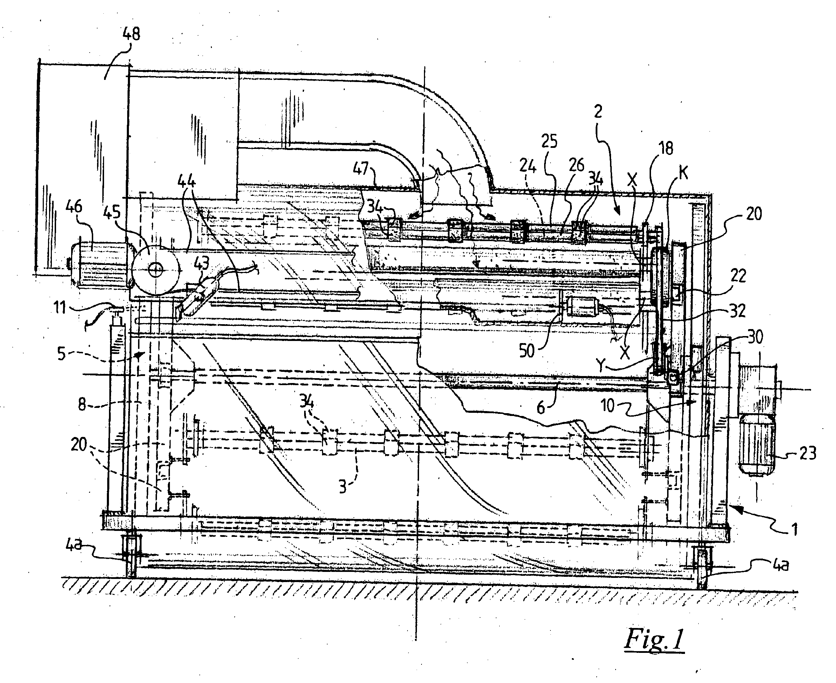

The reel support device subject of the present invention, illustrated schematically in Figure 1, consists essentially of a supporting structure 1 moved by movement means which, in a preferred embodiment, consist of castors 4a; said supporting structure 1 is mechanically connected to a rotating drum 2 on which various supporting spindles 3 are fitted, as will be described below in detail, for example eight spindles 3, suitable for supporting an equal number of manufactured article feed reels 4.

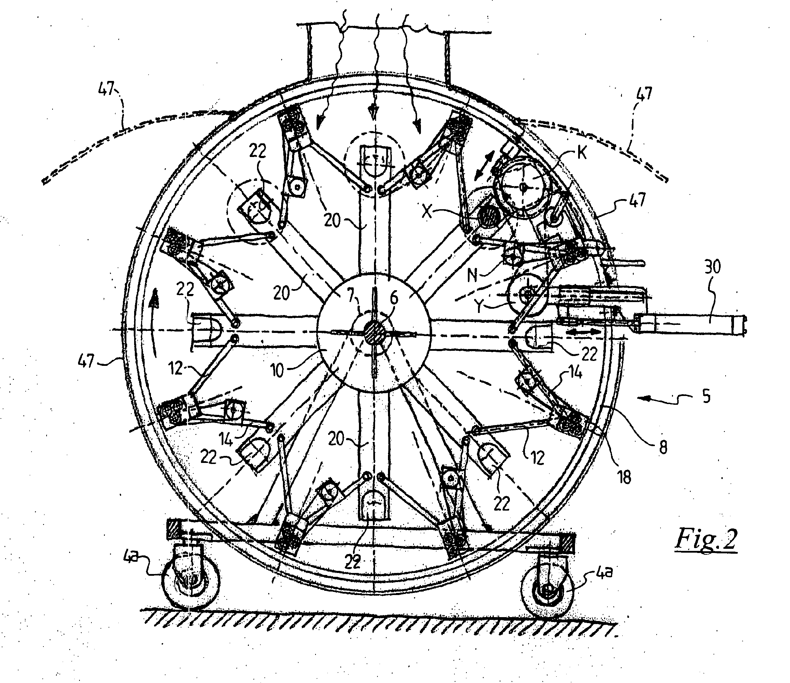

In an embodiment illustrated in Figure 2, the rotating drum 2 consists of two parallel lateral supports 5 joined by a horizontal central shaft 6, fitted on a pair of rotation bearings 7 integral with the supporting structure 1 which permit the rotation movement of said shaft 6 around its own axis of rotation and, consequently, rotation of the drum 2 with respect to the structure 1.

The two parallel lateral supports 5 are preferably but not exclusively circular in shape. Each of said lateral supports 5, as shown in Figure 2, consists of a ring 8 connected to the central hub 10 by arms 12 and 14, the outer ends of which are linked to a connection plate 18 while their inner ends are jointed on rigid arms 20 connected to the central hub 10, said arms 12 and 14 thus being arranged in a V shape. The outer ends of the rigid arms 20 are provided with seats 22 for housing the above-mentioned reel supporting spindles 3. The rotation movement of the drum can be performed in any appropriate way, including the rotation systems provided for in the above-mentioned utility model application of said Applicant which provides for manual activation of the rotation device by means of a crank or by means of a rotation device comprising a pinion, a rack and a worm screw, said device being suitable for imparting the rotation movement to the shaft 6 of the drum 2. According to a preferred embodiment of the present invention, said rotation movement is advantageously controlled by a stepper motor 23, with relative transmission, controlled by a computerised control system (not illustrated) provided with a suitable customised control program.

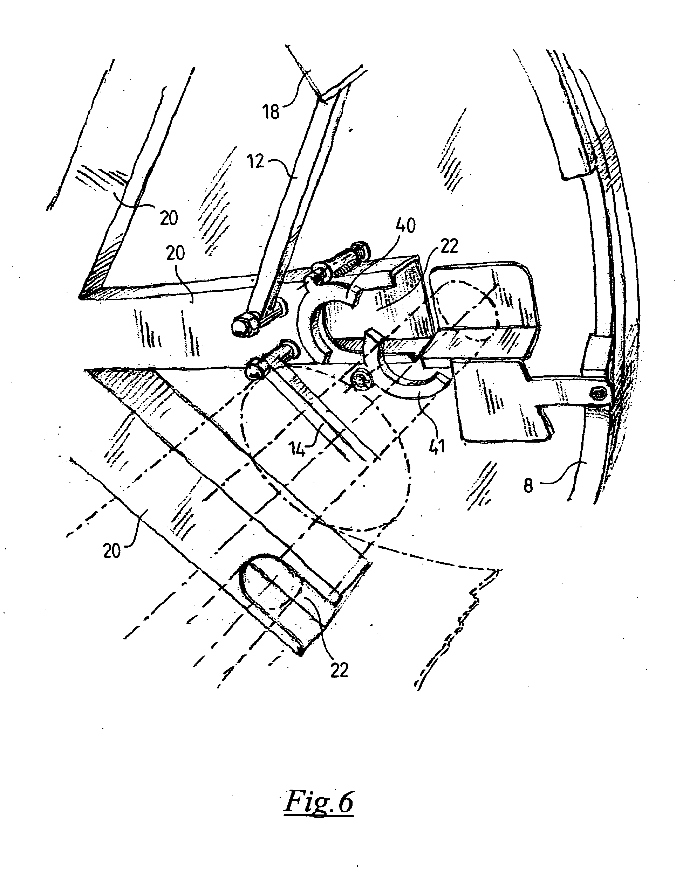

The ends of the spindles 3 supporting the reels are fitted in the housings 22 and retained therein (Fig. 6) by two semi-collars 40,41 coupled together which are opened and closed on said ends of the spindles by the action of a stem of a hydraulic or pneumatic piston (not illustrated).

The following are also provided:
- automatic means for gripping the front edge of the manufactured article wound on the reel;
- means for forward movement by the required length of the manufactured article taken from any one of the reels;
- means for measuring the length of said section of manufactured article constituting the piece of manufactured article to be used;
- means for cutting the manufactured article unwound from the reel in the required length;
- means for recovering the part of the manufactured article unwound from its reel, but not used, which is rewound on said reel by inversion of rotation of the reel;
- means suitable for enclosing the reel holder drum inside a transparent cover, and
- when necessary, means for conditioning the manufactured article wound in reels inside said transparent cover.

During operation, the drum 2 on which the reels are fitted is rotated by an angle set in the control computer to position the reel to be used in the station for withdrawal and cutting of a piece of manufactured article. At this point the data relative to the length of the section of manufactured article to be cut from the reel are entered in the control computer.

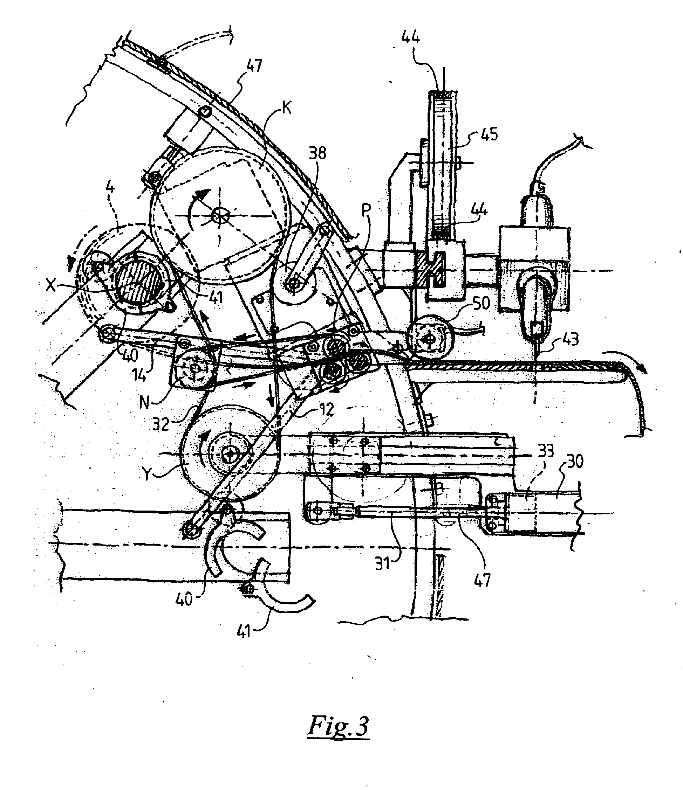

Under the control of said computer, the piston 33 of the pneumatic or hydraulic cylinder 30 (Figure 3) moves forward, thus moving in turn a belt-moving pulley inwards in contact with the timing belt 32 (Figure 3) supported between the timing pulleys K and Y and kept tensioned by the belt tightener 38. This causes anti-clockwise movement of the belt-moving pulley positioned on the arm 14 and of the pulley 37 mounted on a shaft 36 fitted on the relative plate 18 at the junction point of the pairs of arms 12 and 14, which causes unwinding of the manufactured article from the reel 4 rotating in an anti-clockwise direction and subsequently gripping of the front part of the edge of the manufactured article and feeding out of a section of said manufactured article through the rollers 24, 25 and 26 (shown as interrupted). Said rollers are rotated by three spur gears 27, 28, 29 where 27 indicates a control spur gear which engages with the spur gear 28 in turn engaging with the spur gear 29, all preferably fitted on the opposite end of the reel holder spindle since the rotation movement of the pulley 37 is transmitted to the spur gear 27 mounted on the shaft supporting the roller 24 which then rotates in the same rotation direction the other two spur gears 27, 28 mounted on the rollers 25 and 26 which unwind and move the manufactured article forward in contact with rubber-coated bushes 34 (Figure 3). The pulley 37 and the roller 24 are indicated in the drawings as if they were one single element whereas in effect they are coaxial and arranged preferably as said, one on one side of the drum and the other, together with the rollers 24, 25, and 26, on the other side of the drum.

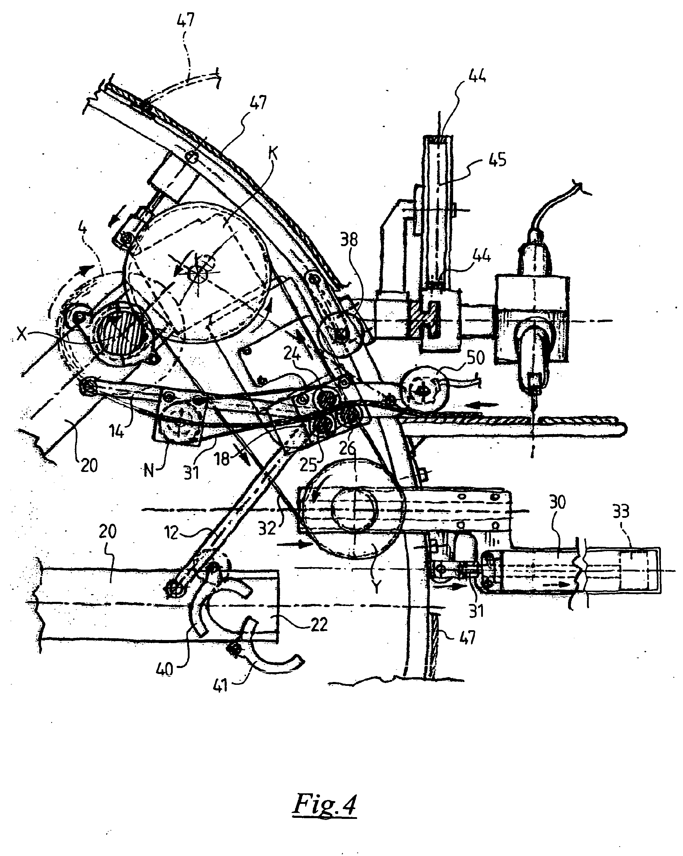

Feed-out of the manufactured article, unwound from the reel 4, first passing through the rollers 24, 25 and then through the rollers 24, 26, continues until (figure 4) a manufactured article feed-out detection device, consisting basically of a linear measuring wheel 50 in contact with the manufactured article, detects that a value pre-set in the computer has been reached, thus activating a cutting device.

Said cutting device 43 is fitted on an annular belt 44 running between two pulleys 45 (only one of which is shown in Figure 1), one of them being controlled by an electric motor 46 which permits movement of the belt and the cutting device 43 first in a longitudinal cutting direction and then inversion of its stroke to the starting and rest position.

After cutting the manufactured article, the computer orders the cylinder 30 to retract its piston 33 and relative stem 31 supporting the pulley Y outwards so that the belt 32 disengages from the belt-moving pulley (Figure 4), the rubber-coated pulley K comes into contact, driven by the cylinder 34, with the hub X of the spindle which supports the reel 4 and the latter therefore rotates in a clockwise direction, hence the material is recovered or rewound on the reel.

The reel holder can furthermore comprise edges sensitive to mechanical contact, connected to the power supply of the movement device of the movable frame 2.

Lastly, the reel holder can be provided with several photocells positioned near the perimeter area of the reel holder and connected to the power supply of the movement device of the movable frame 2.

It is evident that the rotation movement of the shaft 6 can also consist of any electrical, electromechanical, mechanical or pneumatic system, such as the one suggested in the patent application for Italian utility model cited previously which comprises a pinion driven by a rack which in turn is driven by a worm screw. The mechanism, according to said patent application for utility model, could at the outside function manually by means of a crank operation.

The reel holder 10 can be provided with a safety system, for example photocells or proximity detectors, for blocking operation if it comes into contact with objects or persons.

Said safety system can consist of edges sensitive to mechanical contact and/or safety photocells 11. In a preferred embodiment, the sensitive edges are fixed on the base of the supporting structure 1 and the detection by contact occurs throughout the length of said edges as well as on the edges of the same.

The photocells could be positioned on fixed arms integral with the supporting structure 1. Said arms can advantageously be located either at the height of the work surface or near the reel loading surface. Interruption of the infrared beam emitted by the above-mentioned photocells, deriving from the interference of objects and/or persons, results in the control panels stopping or inverting the direction of the movement device.

The reel supporting device subject of the present invention can furthermore comprise manual controls for guiding the movement device in addition to a safety switch for instantly blocking the movement device which are not part of the present invention.

Lastly, a conventional blinking light can also be provided which is activated when the movement device is operating.

The rotating supporting device for a plurality of reels subject of the present invention has numerous and important advantages with respect to the devices used in the known art.

As regards the advantages of the present invention, the creation of a device suitable for moving the reels with respect to the supporting structure of the reel holder firstly eliminates numerous manual operations for feed/set-up of the magazine. In this way the personnel assigned to said operations are advantageously relieved of unnecessary and detrimental physical effort.

Secondly, systematically correct positioning of the reel is guaranteed, both in the case of presentation to the operator in charge and when said reel has to be replaced.

Furthermore the presence of proximity sensors, which determine the presence of objects or persons in areas adjacent to the reel holder, considerably improve operator safety.

A further advantage is obtained from reduction of the costs for set-up of the reels of material, since the manual operations for repositioning the reels and those for replacement of the reels during the various work processes are eliminated.

Lastly, the hooking system guarantees elimination of the danger of work stoppages due to repositioning of the material on the reels whenever said material becomes detached from its support due to rotation of the reel holder during operation.

From the above description it appears evident that the inventive concepts expressed are not limited to the application examples illustrated, but can be advantageously adapted to other analogous applications.

The field of application of the invention is not limited to the embodiment(s) illustrated in the preceding description.

The present invention is therefore subject to numerous modifications and variations, all falling within the inventive concept expressed in the attached claims, while the technical details can vary according to particular needs and the state of the art.

## Claims

1. Rotating support device for a plurality of reels of sheet manufactured articles suitable for permitting feeding and automatic cutting of a piece of said manufactured articles in the required length comprising a supporting structure (1) moved by movement means including castors (4a), to which a rotating drum (2) is mechanically connected on which various supporting spindles (3) are mounted suitable for supporting an equal number of reels (4) for feeding the manufactured article, **characterised in that** said rotating drum (2) comprises two lateral supports (5) parallel to each other and joined by a horizontal central shaft (6), mounted on a pair of rotation bearings integral with said supporting structure (1) which permit the rotation movement of said central shaft (6) around its rotation axis and, consequently, the rotation of said rotating drum (2) with respect to the structure (1), and **in that** said device comprises means (24, 25, 26) for automatic gripping of the front edge of the manufactured article wound on the reel, means (K,Y,N) for moving forward the manufactured article taken from any one of the reels (4) by the required length, means (50) for measuring the length of said section of manufactured article constituting a piece of said manufactured article to be used, means (43) for cutting the material unwound from the reel in the required length, means (X,K,Y) for recovery of the part of manufactured article unwound from its reel but not used which is rewound on the same reel by inversion of rotation of the reel, means for enclosing the reel holder drum (2) forming a transparent cover (47) with hinged sections and, when necessary, means (48) for conditioning the manufactured articles supported by the reels inside said transparent cover (47).

2. Rotating support device for a plurality of reels of sheet manufactured articles as claimed in claim 1, **characterised in that** the two parallel lateral supports (5) are preferably but not exclusively circular in shape, each of said lateral supports (5) including a ring (8) connected to a central hub (10) by two arms (12, 14) arranged in a V shape, the outer ends of which are linked to a connection plate (18) while their inner ends are jointed on rigid radial arms (20) connected to said central hub (10), the outer ends of the rigid radial arms (20) being provided with housings (22) for the above-mentioned spindles (3) supporting the reels.

3. Rotating support device for a plurality of reels of sheet manufactured articles as claimed in claims 1 and 2, **characterised in that** the rotation movement of the drum (2) can be performed in any appropriate way, in particular the rotation movement being advantageously controlled by a stepper motor (23) controlled by a computerised control system provided with customised program.

4. Rotating support device for a plurality of reels of sheet manufactured articles as claimed in claims 1-3, **characterised in that** the ends of the supporting spindles (3) of the reels fitted in said housings (22) are retained therein by two hinged semi-collars (40,41) which are opened and closed juxtaposed against each other on said ends of the spindles by the forward and backward movement of a stem of a hydraulic or pneumatic piston.

5. Rotating support device for a plurality of reels of sheet manufactured articles as claimed in claims 1-4, **characterised in that** the drum on which the reels are mounted can be rotated to an angle set in a control computer in order to position the reel to be used in the cutting station, under the control of the computer.

6. Rotating support device for a plurality of reels of sheet manufactured articles as claimed in claims 1-5, **characterised in that** said timing pulleys (K,Y,N) for forward movement of the manufactured article taken from any one of the reels (4) over which a timing belt (32) passes are operated by the forward movement of a piston (31) of a pneumatic or hydraulic cylinder (30) so that the timing pulley Y mounted on the inner end of said piston (31) is moved outwards, bringing a belt-moving pulley (N) in contact with the timing belt 32 tensioned by a chain tightener (38), so that said belt-moving pulley (N) is positioned on the arm 14 and the pulley (P) mounted on a plate positioned at the connection point of the pairs of arms in a V shape (12, 14) rotate in an anti-clockwise direction, which causes unwinding of the manufactured article from the reel, subsequent gripping of the front section of the edge of the manufactured article and feed-out of a section of said manufactured article between three rollers (24-25;24-26) rotated by three spur gears (27,28,29) mounted preferably on the opposite end of the reel holder spindle.

7. Rotating support device for a plurality of reels of sheet manufactured articles as claimed in claims 1-6, **characterised in that** a feed detector is provided for the manufactured article being fed out, comprising a linear measuring wheel (50) in contact with the manufactured article which, by detecting that a manufactured article feed value pre-set in the computer has been reached, causes the latter to intervene to interrupt unwinding and feed-out of the manufactured article.

8. Rotating support device for a plurality of reels of sheet manufactured articles as claimed in claims 1-7, **characterised in that**, after reaching of a pre-set manufactured article feed value has been detected, the computer orders cutting in a transverse direction of the manufactured article unwound and the piston of the cylinder 30 is retracted outwards together with the relative stem 31 of the piston supporting the pulley Y, so that the belt disengages from the pulley N, the rubber-coated timing pulley K, driven by the cylinder 34, comes into contact with the hub X of the spindle which supports the reel, and said reel therefore rotates in reverse direction, recovering or rewinding the material on the reel.

9. Rotating support device for a plurality of reels of sheet manufactured articles as claimed in claims 1-8, **characterised in that** said means for cutting the manufactured article unwound from the reel in the required length comprise a cutting blade (43) connected to an annular belt (44) running between two pulleys to an annular belt (44) running between two pulleys (45), one of which is driven by an electric motor (46) controlled by said computer, said pulleys (46) being arranged at the sides of the supporting frame in its front part.

10. Rotating support device for a plurality of reels of sheet manufactured articles as claimed in claims 1-9, **characterised in that** said means for conditioning the manufactured articles supported by the reels inside said transparent cover (47) comprise a refrigeration unit (48) suitable for maintaining an appropriate temperature below ambient temperature under the control of said computer.

11. Rotating support device for a plurality of reels of sheet manufactured articles suitable for permitting feeding and automatic cutting of a piece of said manufactured articles in the required length comprising a supporting structure (1) moved by movement means including castors (4a), to which a rotating drum (2) is mechanically connected, on which supporting spindles (3) are mounted suitable for supporting an equal number of manufactured article feed reels (4), **characterised in that** said rotating drum (2) comprises two parallel lateral supports (5) joined by a horizontal central shaft (6), mounted on a pair of rotation bearings integral with said supporting structure (1) which permit the rotation movement of said central shaft (6) around its rotation axis and, consequently, the rotation of said rotating drum (2) with respect to the structure (1), means (K,Y,N) for moving forward the manufactured article taken from any one of the reels (4) by the required length, means (X,K,Y) for recovery of the part of the manufactured article unwound from its reel but not used which is rewound on the same reel by inversion of rotation of the reel.

## Amended claims

### Amended claims in accordance with Rule 137(2) EPC.

**1.** Rotating support device for a plurality of reels of sheet manufactured articles suitable for permitting feeding and automatic cutting of a piece of said manufactured articles in the required length comprising a supporting structure (1) moved by movement means including castors (4a), to which a rotating drum (2) is mechanically connected on which various supporting spindles (3) are mounted suitable for supporting an equal number of reels (4) for feeding the manufactured article, said rotating drum (2) being mounted on two lateral supports (5) parallel to each other and joined by a horizontal central shaft (6), mounted on a pair of rotation bearings integral with said supporting structure (1) which permit the rotation movement of said central shaft (6) around its rotation axis and, consequently, the rotation of said rotating drum (2) with respect to the structure (1),
**characterized in that** it comprises means (24, 25, 26) for automatic gripping of the front edge of the manufactured article wound on the reel, means (K,Y,N) for moving forward the manufactured article taken from any one of the reels (4) by the required length, means (50) for measuring the length of said section of manufactured article constituting a piece of said manufactured article to be used, means (43) for cutting the material unwound from the reel in the required length, means (X,K,Y) for recovery of the part of manufactured article unwound from its reel but not used which is rewound on the same reel by inversion of rotation of the reel.

**2.** Rotating support device for a plurality of reels of sheet manufactured articles as claimed in claim 1, **characterised in that** the two parallel lateral supports (5) are preferably but not exclusively circular in shape, each of said lateral supports (5) including a ring (8) connected to a central hub (10) by two arms (12, 14) arranged in a V shape, the outer ends of which are linked to a connection plate (18) while, their inner ends are jointed on rigid radial arms (20) connected to said central hub (10), the outer ends of the rigid radial arms (20) being provided with housings (22) for the above-mentioned spindles (3) supporting the reels.

**3.** Rotating support device for a plurality of reels of sheet manufactured articles as claimed in claims 1 and 2, **characterised in that** the rotation movement of the drum (2) can be performed in any appropriate way, in particular the rotation movement being advantageously controlled by a stepper motor (23) controlled by a computerised control system provided with customised program.

**4.** Rotating support device for a plurality of reels of sheet manufactured articles as claimed in claims 1-3, **characterised in that** the ends of the supporting spindles (3) of the reels fitted in said housings (22) are retained therein by two hinged semi-collars (40,41) which are opened and closed juxtaposed against each other on said ends of the spindles by the forward and backward movement of a stem of a hydraulic or pneumatic piston.

**5.** Rotating support device for a plurality of reels of sheet manufactured articles as claimed in claims 1-4, **characterised in that** the drum on which the reels are mounted can be rotated to an angle set in a control computer in order to position the reel to be used in the cutting station, under the control of the computer.

**6.** Rotating support device for a plurality of reels of sheet manufactured articles as claimed in claims 1-5, **characterised in that** said timing pulleys (K,Y,N) for forward movement of the manufactured article taken from any one of the reels (4) over which a timing belt (32) passes are operated by the forward movement of a piston (31) of a pneumatic or hydraulic cylinder (30) so that the timing pulley Y mounted on the inner end of said piston (31) is moved outwards, bringing a belt-moving pulley (N) in contact with the timing belt 32 tensioned by a chain tightener (38), so that said belt-moving pulley (N) is positioned on the arm 14 and the pulley (P) mounted on a plate positioned at the connection point of the pairs of arms in a V shape (12, 14) rotate in an anti-clockwise direction, which causes unwinding of the manufactured article from the reel, subsequent gripping of the front section of the edge of the manufactured article and feed-out of a section of said manufactured article between three rollers (24-25;24-26) rotated by three spur gears (27,28,29) mounted preferably on the opposite end of the reel holder spindle.

**7.** Rotating support device for a plurality of reels of sheet manufactured articles as claimed in claims 1-6, **characterised in that** a feed detector is provided for the manufactured article being fed out, comprising a linear measuring wheel (50) in contact with the manufactured article which, by detecting that a manufactured article feed value pre-set in the computer has been reached, causes the latter to intervene to interrupt unwinding and feed-out of the manufactured article.

**8.** Rotating support device for a plurality of reels of sheet manufactured articles as claimed in claims 1-7, **characterised in that**, after reaching of a pre-set manufactured article feed value has been detected, the computer orders cutting in a transverse direction of the manufactured article unwound and the piston of the cylinder 30 is retracted outwards together with the relative stem 31 of the piston supporting the pulley Y, so that the belt disengages from the pulley N, the rubber-coated timing pulley K, driven by the cylinder 34, comes into contact with the hub X of the spindle which supports the reel, and said reel therefore rotates in reverse direction, recovering or rewinding the material on the reel.

**9.** Rotating support device for a plurality of reels of sheet manufactured articles as claimed in claims 1-8, **characterised in that** said means for cutting the manufactured article unwound from the reel in the required length comprise a cutting blade (43) connected to an annular belt (44) running between two pulleys (45), one of which is driven by an electric motor (46) controlled by said computer, said pulleys (45) being arranged at the sides of the supporting frame in its front part.

**10.** Rotating support device for a plurality of reels of sheet manufactured articles as claimed in claims 1-9, **characterised in that** it comprises means for enclosing the reel holder drum (2) which form a transparent cover (47) with hinged sections.

**11.** Rotating support device for a plurality of reels of sheet manufactured articles as claimed in claims 1-10, **characterised in that** it comprises means (48) for conditioning the manufactured articles supported by the reels inside said transparent cover (47).

**12.** Rotating support device for a plurality of reels of sheet manufactured articles as claimed in claims 11, **characterised in that** said means for conditioning the manufactured articles supported by the reels inside said transparent cover (47) comprise a refrigeration unit (48) suitable for maintaining an appropriate temperature below ambient temperature under the control of said computer.
